# EUROPEAN PATENT SPECIFICATION

(11) **EP 1 895 631 B1**
(45) Date of publication and mention of the grant of the patent: **21.12.2011**
(21) Application number: 06254477.0
(22) Date of filing: 29.08.2006
(51) Int. Cl.: H02G 3/12, H02G 3/14

(54) **Electrical accessory box**
Elektrische Gerätedose
Boîtier d'appareil pour dispositif d'installation électrique

(43) Date of publication of application: 05.03.2008
(73) Proprietor: C & C Marshall Limited, Churchfields Industrial Estate St Leonards-on-Sea, East Sussex TN38 9PU (GB); Apex Cables Limited, Meadowfield Industrial Estate Durham City DH7 8RJ (GB)
(72) Inventor: Softley, Andrew John Kenneth, St. Leonards-on-Sea East Sussex TN37 7EF (GB)
(74) Representative: Lamb, Martin John Carstairs

(56) References cited:
- GB-A- 2 117 573
- US-A- 2 875 914
- US-A- 3 951 489

## Description

The present invention relates to an electrical accessory box of the type for insertion into a hole in a sheet of material constituting part of a cavity wall. This kind of accessory box is commonly called a dry lining box.

A widely used type of electrical accessory box is described in GB2117573. This provides an electrical accessory box comprising a hollow body which is opened at one end, which has four side walls, and flanges extending outwardly from the side walls adjacent to the one end of the body. A pair of substantially oppositely disposed apertures are provided in two side walls and two clamps are provided, each mounted in the body adjacent to a respective aperture for swivelable movement about an axis normal to the one end of the body between a first position in which a clamping arm of the clamp is within the body and a second position in which the clamping arm projects outwardly from the body through a respective aperture. The flanges are also capable of slidable movement in a direction parallel to the axis. In use, the box can be mounted in a hole in the cavity wall and the clamping arm can be made to engage the rear face of a sheet of material constituting part of the cavity wall whilst the flanges engage the front face of the sheet.

It is particularly preferred that the clamps should have locking means for locating the clamping arms in their respective second position. In use, an installer will first of all form a hole in the sheet material of the cavity wall, the hole being of a size just large enough to accept the hollow body. The box is then placed in the hole, with the clamping arms in their first position within the body so that they do not block insertion of the box into the hole. Once in position, an installer can manually push the clamping arms outward into the second position. Subsequently, electrical accessories can be placed in the box and connected to cabling within the cavity through specially provided holes in the side of the box. While electrical connections are made, the box is loosely held in position by the flanges and the clamping arms which are held in their second positions by the locking means. Finally, when the installer comes to attach a face plate, screws extending through the face plate engage screw holes in pivots of the flanges. Rotation of the screws draws the flanges towards the face plate, so that the clamping arms are gripped tightly against the rear face of the sheet of material constituting the cavity wall. This arrangement is highly successful and relatively easy to use.

However, there is a desire to simplify operation further.

There is also a growing need to supply electrical accessory boxes in which electrical accessories are mounted in place in the box in the factory. It may even be necessary to supply an electrical accessory box with a face plate in position.

However, where such a pre-wired electrical accessory box is provided, it has been found that it is no longer possible for the operator to manually move the clamping arm from its first position to the second position. Access to the clamping arm is blocked by the electrical accessory or by the face plate. However, as the locking means is found to present some resistance to the rotation from the first position to the second position, some kind of drive is required.

The present invention sets out to provide an electrical accessory box, in which the clamping arms can be rotated from their first position to the second position against the resistance of the locking means and without the operator having to gain access to the interior of the electrical accessory box to manually move the clamping arms.

The present inventors have realised that the screw which is used to draw the clamping arm into engagement with the rear face of the sheet of material constituting the cavity wall can also be used to rotate the clamp. However, it is necessary to ensure that the coefficient of friction between the screw and the clamp is sufficient to overcome the resistance of the locking means.

Accordingly, the present invention provides an electrical accessory box, comprising a hollow body which is open at one end and which has at least one side wall, at least one flange extending outwardly from the side wall at or adjacent to the one end of the body, at least one aperture in the side wall, and at least one clamp mounted in the body adjacent to the aperture for rotational movement about an axis normal or substantially normal end to the one end of the body between a first position in which a clamping arm of the clamp is within the body and a second position in which the clamping arm projects outwardly from the body through the aperture, and for slidable movement in a direction parallel to said axis, locking means being provided for resisting rotational movement between the second position and the first position, wherein in use, the box can be mounted in a hole in the cavity wall and the clamping arm can be made to engage the rear face of a sheet of material constituting part of the cavity wall whilst the flange engages the front face of the sheet, the clamp comprising a drive part for engaging a screw threaded member, characterised in that the coefficient of friction between the drive part and the screw threaded member is such that rotation of the screw threaded member can drive the drive part rotationally, to rotate the clamp against the resistance of the locking means, from the first position to the second position, wherein the screw threaded member and the drive part engage one another in a screw thread contact zone and, separately, in a friction zone (F), a friction member being provided on the drive part for frictionally engaging the screw threaded member, the friction member comprising a projection integrally moulded with the drive part.

The invention allows the box to be installed without the user having to manually rotate the clamp from the first position to the second position. The invention allows this to be achieved with a small number of parts and with a small amount of redesign over the existing box. The invention is simple and convenient to install.

Preferred or optional features of the present invention will be described further below.

Preferably, the electrical accessory box of the present invention has at least two side walls and preferably four side walls to define a square or rectangular box. Preferably, there is a base member. At least one access hole may be provided in at least one wall or in the base through which connecting cables may extend. The access hole may be provided with a knock-out portion, in manner known to the person skilled in the art.

Preferably, there are at least two flanges, each extending from a respective side wall. Preferably, there is a flange extending outwardly from each side wall.

Preferably, there are two clamps, each mounted in the body adjacent to a respective aperture.

The box is suitably made of thermoplastic material, for example UPVC. Preferably, it is injection moulded.

In a preferred embodiment, the locking means comprises a deflection bar on the hollow body and a deflector cam on the clamping arm, the arrangement being such that, as the arm moves from its first to its second position, the cam first deflects the deflection bar and then releases the deflection bar, so that the latter moves behind the cam.

The deflection bar is suitably integral with the body and is defined between a respective aperture and a slot in the body.

Preferably each clamp includes a pivot mounted for rotational and axial movement in a bearing integral with or secured to the body. Preferably, each clamp has a shield for covering the respective aperture when the clamping arm is in its second position.

According to the invention, the screw threaded member and the drive part engage one another in a screw thread contact zone and, separately, in a friction zone. In the friction zone, a friction member is provided on the drive part for frictionally engaging the screw threaded member, the friction member comprising a projection integrally moulded with the drive part.

This arrangement has a number of advantages.

The drive zone can be formed in a conventional manner. Conventional structures can be used, for example, a screw threaded insert engaging the screw threaded part of a screw. This can simplify manufacture and design.

Secondly, in the friction zone, the friction member can be designed and formed relatively simply. The desired level of friction can be obtained and controlled by forming the friction member so that it presses on the other of the screw threaded member and drive part with sufficient force to generate the required level of friction. It is found that, given the tolerances which are normally experienced in production methods, such as moulding, it is a relatively straightforward matter to successfully dimension a friction member to give the correct level of friction.

The friction member prefereably extends from the drive part into the path of the screw threaded member. Preferably, the friction member is mounted adjacent to the screw thread contact zone. Preferably, it comprises an integrally moulded upstand formed on an inner bore of the drive part for engaging a screw.

It is of course necessary that the drive part and the screw threaded member should be capable of sliding with respect to one another if sufficient force is applied to overcome the friction therebetween. This will allow the screw threaded member to rotate with respect to the drive part if sufficient force is applied so that the drive part is moved axially along the screw threaded member.

There are a number of ways by which the coefficient of friction between the screw threaded members and the drive part can be additionally controlled.

For example, the drive part and the screw threaded member may have a surface finish which provide the desired level of friction. This can be obtained for example by making the surfaces with a matt finish or with surface projections, for example ridges, of appropriate size to provide the desired level of friction. The drive part and the screw threaded member may be formed of thermoplastic material or metal. The contacting surfaces may be roughened to provide the desired level of friction.

In a particular preferred embodiment, the screw threaded member comprises a screw. Screws are very widely available and are accordingly cheap and very familiar in use.

However, such screws typically have relatively smooth surfaces.

The present invention provides a friction zone to provide sufficient friction.

The desired coefficient of friction can be obtained by taking a standard screw and then roughening at least part of the surface thereof.

The drive part may comprise a moulded bore. The diameter of the bore may be set so that it forms a relatively tight engagement with the screw, so that a high level of friction can be obtained.

Preferably each clamping arm has an outer edge of generally arcuate shape centred on the axis of the respective clamp.

Preferably, the electrical accessory box comprises an electrical accessory, fixed in position in the box.

Connector cables, having connections at their ends, may extend from the electrical accessory box, for example through holes in the electrical accessory box.

The electrical accessory box may comprise a face plate, covering the interior of the hollow body. Preferably, the screw threaded member extends through the face plate. Preferably, the screw threaded member comprises a screw. The head of the screw is preferably accessible from outside the electrical accessory box so that it can be rotated for example by a screw driver. The screw threaded member is preferably configured to fix the face plate to the body.

Preferably, at least one screw is provided in a screw hole in the face plate.

In this way, the electrical accessory box can be provided as a substantially complete unit with an electrical accessory contained in the box, the box being closed at its front face by the face plate and with electrical connector cables having first connectors extending from the rear or side of the accessory box, service cables having corresponding connectors being located within the cavity wall.

In use, the installer first of all connects each respective service cable to the respective electrical connector cable, with the electrical accessory box placed near to the hole in the sheet of the cavity wall, but not closing it. When the connection is formed, the accessory box can be placed snugly in the hole. Then the installer rotates the screw threaded member, for example with a screwdriver, so that the clamping arms are first moved from the first position to the second position, due to frictional engagement between the screw threaded member and the clamp. Then, as the installer continues to rotate the screw threaded member with sufficient force to overcome the friction between the screw threaded member and the drive part, the drive part is caused to slide axially along the screw threaded member so that the clamping arm engages the rear face of the cavity wall material.

The present invention will be further described by way of example only with reference to the accompanying drawings, in which:

### BRIEF DESCRIPTION OF THE DRAWINGS

Figure 1 is a perspective view of one embodiment of an electrical accessory box according to the invention.
Figure 2 is a section through one side of the box and one of the clamps, with the clamp shown engaging the rear face of a sheet of material.
Figure 3 is an enlarged section through one of the clamps, at an enlarged scale.
Figure 4 is a sketch isometric view of a complete electrical accessory box according to the present invention.

Referring now to the drawings, the electrical accessory box shown therein provides a housing for electrical accessories such as switches and sockets and is suitable for use in cavity walls which comprise a pair of relatively thin sheets of material held in spaced relationship or with dry lining applied to existing walls. The electrical accessory box indicated by the general reference number 10 has a body 11 formed of plastics material and two clamps 12 and 13 essentially formed of plastics material. The body 11 is open at one end, has a square base wall 14, side walls 15 and flanges 16 extending outwardly from the side walls at the open end of the box to define a continuous rim.

Each clamp 12, 13 comprises a pillar 17, a wing-like shield 18 which projects transversely from the pillar and a clamping arm 19 which projects from one face of the shield 18 and which has an outer edge 20 of generally arcuate shape centred on the longitudinal axis of the pillar.

The pillars 17 of the clamps 12 and 13 are mounted in bearings formed from sleeves 21 secured to or integral with the body 11. The sleeves 21 are positioned midway between the ends of two opposite side walls 15 of the body 11 and apertures 22 are provided in these two side walls adjacent to the clamps. The other two side walls are provided with knock-out portions 23 to provide cable entries.

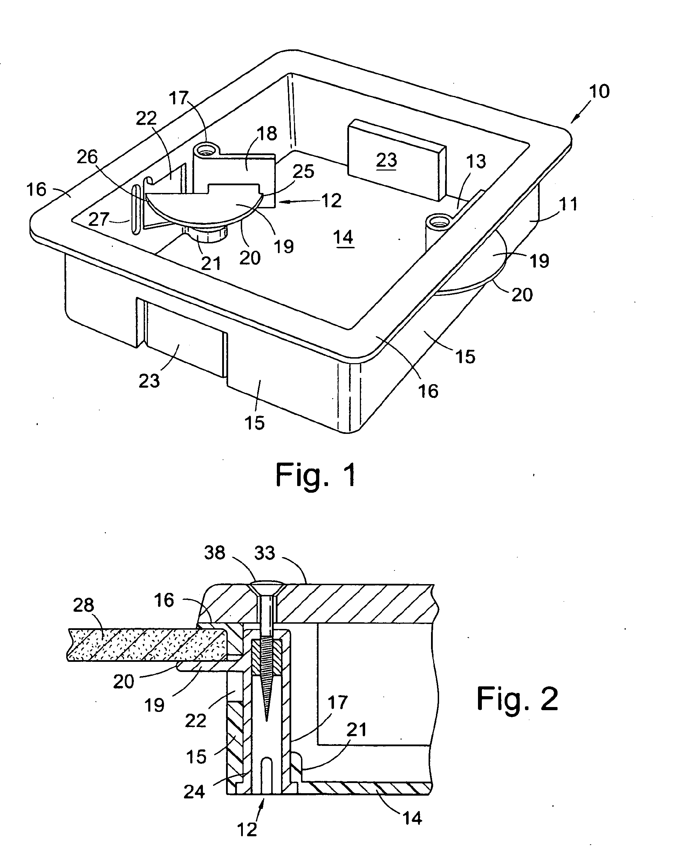

As shown more particularly in Figure 2, the pillar 17 of each clamp is hollow and has a threaded brass insert at its end adjacent to the open end of the body 11.
At its other end, the pillar 17 is provided with four longitudinally extending slits which define four fingers 24 having barb-like formations at their free ends. This allows for insertion and retention of the pillar in the respective sleeve 21.

Each pillar 17 is mounted in its respective sleeve 21 for rotational movement and axial sliding movement.

Each pillar 17 is an interference fit in its respective sleeve 21 so that there is a frictional resistance to movement of the pillar relative to the sleeve. By swivelling each pillar 17 about its axis, the clamping arm 19 can be moved from a position in which it is disposed within the body 11 (see Fig. 1) to a position in which it projects outwardly from the body 11 through a respective aperture 22 and in which the respective shield 18 engages the side wall 14 and covers the aperture 22.

In order to lock the clamping arm in the position in which it projects outwardly through the aperture 22 and its associated shield 18 engages the side wall 14, the clamping arm 19 is provided with locking means comprising a pip cam 25 on its outer edge and adjacent to but spaced from the shield 18 and the body 11 is provided with a deflection bar 26 defined between the aperture 22 and an elongate slot 27. As the clamp 12, 13 is swivelled and the clamping arm 19 approaches its outermost position, the pip cam first deflects the deflection bar away from the aperture 22 and then releases the deflection bar so that the latter moves behind the cam to provide a degree of resistance to swivellable movement of the clamp in the opposite angular direction. The deflection bar engages the pip cam 25 and/or the outer edge 20 of the clamping arm when the clamping arm is in its outermost position so that the overall frictional resistance to slidable movement of the clamp relative to the body is sufficient to enable the clamps to hold the box in position in a cavity wall before it is fixed.

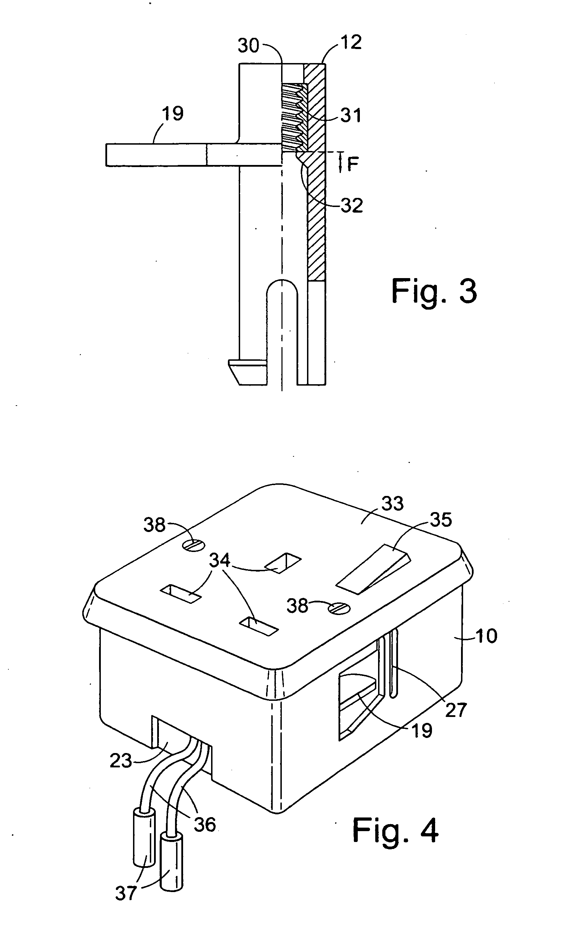

Figure 3 shows a part sectional view of the clamp at enlarged scale. The part on the right hand side of the centre line 30 is shown in cross section.

It can be seen that the clamp 12 comprises a thermoplastic moulded part which includes, at the top, a brass insert 31, fixed in place by moulding.

The brass insert 31 provides a screw-thread contact zone. In use, it will engage a screw (not shown). A screw threaded surface of the insert will engage the screw threaded surface of the screw, relatively smoothly, allowing a relatively free movement of the screw with respect to the insert 31.

In order to provide a sufficiently high coefficient of friction so that the rotation of the screw can cause the clamping arm to rotate past the deflection bar 26, a friction zone is provided (indicated by the arrow F, immediately below the insert 31 in Figure 3). The friction zone F comprises a friction member 32. The friction member 32 is an integrally moulded projection which projects into the bore so that, when a screw is inserted, it will make frictional contact with the end of the projection 32. The projection 32 can be dimensioned so that the correct level of friction is obtained, in a relatively simple way which can be put into practice by an injection moulding process.

Figure 4 shows a sketch isometric view of an electrical accessory box according to the invention in an assembled state, before insertion into the hole in cavity walling. It is of the type which is assembled in the factory with the box 10 and a face plate 33 covering an electrical accessory. The accessory is a three-pin socket of which the socket holes 34 and a switch 35 are visible but the internal structure is not visible, being contained inside the box 10. The socket is pre-wired with connector cables 36 which terminate in first connectors 37. The connection cables extend through the hole 23 in the box 10. The face plate 33 is held in position loosely by screws, the heads 38 of which are visible. Each screw engages with a respective clamp 12, 13, being engaged with the respective insert 31 and projection 32.

When it is desired to provide cavity walling with the box in position, the cavity walling is first of all assembled with a dry lining sheet, with a hole of sufficient size to accommodate the box 10. Cables are laid within the cavity behind the dry lining sheet.

In order to assemble the box in place, the installer first of all connects the first connectors 37 of the connector cables 36 to corresponding connectors (not shown) of the cables which are laid in the cavity. By doing this, the box 10 is put in complete electrical contact with the circuit of which is to form a part. It only remains to fix the box 10 in position in the hole. This is done by positioning the body 11 of the box in the hole in the cavity wall. The clamps 12, 13 are in their first position in which they are entirely held within the body 11 (as shown in figure 4). In this position, they do not catch against the sheet of the dry lining. Once in position, the installer simply needs to tighten up each of the screws with a screwdriver.

During a first phase of tightening the screws, the screws will engage the clamps with sufficient friction, due to frictional engagement with the projection 32, that the clamps are rotated against the resistance of the locking means so that the clamping arms click into position in their second position as shown in figure 2, with the pip cam riding over the bar 26. Once the clamp is in the second position, further rotation of the clamps 12, 13 is impossible. If the installer then continues to rotate the screw, with greater force, the screw will start to slip with respect to projection 32 and rotate with respect to the insert 31.

The clamps are then drawn towards the rear face of the sheet of material 28 (see Fig. 2) constituting part of the cavity wall whilst the flanges 16 engage the front face of the sheet 28.

In the example described above, the flanges 16 define a continuous rim around the open end of the body 11, but instead flanges may be provided only adjacent to the clamps 12 and 13.

With the provision for axial as well as rotational movement of the clamps, the clamping arms are able to grip cavity wall sheets of different thicknesses.

Of course, the base 14 may be of any other convenient shape such as of rectangular or circular shape.

The present invention has been described above by way of example only and modifications can be made within the scope of the claims.

## Claims

1. An electrical accessory box (10) comprising a hollow body (11) which is open at one end and which has at least one side wall (15), at least one flange (16) extending outwardly from the side wall (15) at or adjacent to the one end of the body, at least one aperture (22) in the side wall (15), and at least one clamp (12, 13,) mounted in the body adjacent to the aperture (22), for rotational movement about an axis normal or substantially normal to the one end of the body (11), between a first position in which a clamping arm (19) of the clamp (12, 13) is within the body (11) and a second position in which the clamping arm (19) projects outwardly from the body (11) through the aperture (22) and for slideable movement in a direction parallel to said axis, locking means (26) being provided for resisting rotational movement between the second position and the first position, wherein in use, the box (10) can be mounted in a hole in a cavity wall and the clamping arm (20) can be made to engage the rear face of a sheet (28) of material constituting part of the cavity wall whilst the flange engages the front face of the sheet (28), the clamp (12,13) comprising a drive part for engaging a screw threaded member (38), **characterised in that** the coefficient of friction between the drive part and the screw threaded member (38) is such that rotation of the screw threaded member (38) can drive the drive part rotationally to rotate the clamp (12, 13) against the resistance of the locking means (26) from the first position to the second position, wherein the screw threaded member (38) and the drive part engage one another in a screw thread contact zone (31) and, separately, in a friction zone (F), a friction member (32) being provided on the drive part for frictionally engaging the screw threaded member, the friction member comprising a projection (32) integrally moulded with the drive part.

2. The box of claim 1, wherein the locking means comprises a deflection bar (26) on the hollow body (11) and a deflector cam (20) on the clamping arm (19), the arrangement being such that as the arm (19) moves from its first to its second position, the cam (20) first deflects the deflection bar (26) and then releases the deflection bar (26) so that the latter moves behind the cam (20).

3. The box of claim 1 or 2, wherein each clamp (12, 13) includes a pillar (15) mounted for angular and axial movement in a sleeve (21) integral with or secured to the body portion (11).

4. An electrical accessory box according to any preceding claim, comprising a face plate (33) covering the interior of the hollow body (11).

5. An electrical accessory box according to claim 4, wherein the screw threaded member (38) extends through the face plate (33).

6. An electrical accessory box according to any preceding claim, wherein the screw threaded member comprises a screw (38).

7. An electrical accessory box according to any preceding claim, including an electrical accessory.

8. An electrical accessory box according to claim 7, wherein the box is closed at the said one end by a face plate, electrical connector cables having first connectors extending from the rear or side of the accessory box for engaging surface cables having corresponding connectors located within the cavity wall.

## Patentansprüche

1. Elektrische Zubehörbox (10), umfassend einen Hohlkörper (11), der an einem Ende offen ist und der mindestens eine Seitenwand (15) aufweist, mindestens einen Rand (16), der sich nach außen von der Seitenwand (15) an oder neben dem einen Ende des Körpers erstreckt, mindestens eine Öffnung (22) in der Seitenwand (15), und mindestens ein Klemmelement (12, 13), das im Körper neben der Öffnung (22) montiert ist, für eine Rotationsbewegung um eine Achse, lotrecht oder im Wesentlichen lotrecht zum einen Ende des Körpers (11), zwischen einer ersten Position, in der sich ein Klemmarm (19) des Klemmelements (12, 13) innerhalb des Körpers (11) befindet und einer zweiten Position, in der der Klemmarm (19) nach außen von dem Körper (11) durch die Öffnung (22) hervorsteht, und für eine Gleitbewegung in eine Richtung parallel zur Achse, wobei Verriegelungsmittel (26) bereitgestellt sind, um der Rotationsbewegung zwischen der zweiten Position und der ersten Position zu widerstehen, wobei, bei Gebrauch, die Box (10) in einem Loch in einer Hohlwand montiert werden kann und der Klemmarm (19) dazu gebracht werden kann, mit der Rückfläche einer Materialplatte (28) in Eingriff zu kommen, die einen Teil der Hohlwand ausmacht, während der Rand mit der Vorderfläche der Platte (28) in Eingriff kommt, wobei die Klemme (12, 13) einen Führungsteil umfasst, um mit einem Schraubgewindeelement (38) in Eingriff zu kommen, **dadurch gekennzeichnet, dass** der Reibungskoeffizient zwischen dem Führungsteil und dem Schraubgewindeelement (38) derartig ist, dass die Rotation des Schraubgewindeelements (38) den Führungsteil rotationsartig antreiben kann, um das Klemmelement (12, 13) gegen den Widerstand der Verriegelungsmittel (26) von der ersten Position in die zweite Position zu drehen, wobei das Schraubgewindeelement (38) und der Führungsteil in einem Schraubgewinde-Kontakbereich (31) miteinander in Eingriff kommen und wobei, getrennt davon, in einem Reibungsbereich (F), ein Reibungselement (32) auf dem Führungsteil bereitgestellt ist, um reibend mit dem Schraubgewindeelement in Eingriff zu kommen, wobei das Reibungselement einen Vorsprung (32) umfasst, der ganzheitlich mit dem Führungsteil geformt ist.

2. Box nach Anspruch 1, wobei die Verriegelungsmittel eine Ablenkungsstange (26) auf dem Hohlkörper (11) und eine Ablenkungsnocke (20) auf dem Klemmarm (19) umfasst, wobei die Anordnung derartig gestaltet ist, dass, wenn sich der Arm (19) von seiner ersten in seine zweite Position bewegt, die Nocke (20) zuerst die Ablenkungsstange (26) verbiegt und dann die Ablenkungsstange (26) loslässt, so dass diese sich hinter die Nocke (20) bewegt.

3. Box nach Anspruch 1 oder 2, wobei jedes Klemmelement (12, 13) eine Tragstütze (15) einschließt, die zwecks winkgeliger oder axialer Bewegung in einer Hülse (21) montiert ist, die ganzheitlich mit dem Körper (11) gebildet oder an diesem befestigt ist.

4. Elektrische Zubehörbox nach einem der vorangehenden Ansprüche, umfassend eine Abdeckplatte (33), die das Innere des Hohlkörpers (11) bedeckt.

5. Elektrische Zubehörbox nach Anspruch 4, wobei sich das Schraubgewindeelement (38) durch die Abdeckplatte (33) erstreckt.

6. Elektrische Zubehörbox nach einem der vorangehenden Ansprüche, wobei das Schraubgewindeelement eine Schraube (38) umfasst.

7. Elektrische Zubehörbox nach einem der vorangehenden Ansprüche, einschließend elektrisches Zubehör.

8. Elektrische Zubehörbox nach Anspruch 7, wobei die Box an dem einen Ende durch eine Abdeckplatte verschlossen wird, wobei elektrische Verbindungskabel erste Verbinder aufweisen, die sich von der Rückseite oder Seite der Zubehörbox erstrecken, um mit Oberflächenkabeln einzugreifen, die entsprechende Verbinder innerhalb der Hohlwand aufweisen.

## Revendications

1. Boîte à accessoires électriques (10), comprenant un corps creux (11) qui est ouvert à une extrémité et qui comporte au moins une paroi latérale (15), au moins une bordure (16) s'étendant vers l'extérieur de la paroi latérale (15) à l'extrémité du corps ou à proximité de celle-ci, au moins une ouverture (22) dans la paroi latérale (15), et au moins un élément de serrage (12, 13) monté dans le corps à proximité de l'ouverture (22) pour un mouvement rotatif sur un axe perpendiculaire ou essentiellement perpendiculaire à ladite extrémité du corps (11), entre une première position dans laquelle un bras de serrage (19) de l'élément de serrage (12, 13) est à l'intérieur du corps (11) et une deuxième position dans laquelle le bras de serrage (19) fait saillie vers l'extérieur du corps (11) à travers l'ouverture (22) et pour un mouvement par glissement dans une direction parallèle audit axe, des moyens de verrouillage (26) étant prévus pour résister au mouvement rotatif entre la deuxième position et la première position, dans lequel, lors de son utilisation, la boîte (10) peut être montée dans un trou dans une paroi creuse et le bras de serrage (19) peut être amené à s'engager dans la face arrière d'une plaque (28) de matériau qui constitue une partie de la paroi creuse alors que la bordure s'engage avec la face avant de la plaque (28), l'élément de serrage (12, 13) comprenant une partie de guidage pour s'engager avec un élément vissé (38), **caractérisé en ce que** le coefficient de friction entre la partie de guidage et l'élément vissé (38) est tel que la rotation de l'élément vissé (38) peut entraîner la partie de guidage de manière rotative pour faire tourner l'élément de serrage (12, 13) contre la résistance des moyens de verrouillage (26) de la première position vers la deuxième position, l'élément vissé (38) et la partie de guidage s'engageant mutuellement dans une zone de contact par filetage (31) et, séparément, dans une zone de friction (F), un élément de friction (32) se trouvant sur la partie de guidage pour s'engager par friction avec l'élément vissé, l'élément de friction comprenant une saillie (32) moulée intégralement avec la partie de guidage.

2. Boîte selon la revendication 1, dans laquelle les moyens de verrouillage comprennent une barre de déviation (26) sur le corps creux (11) et une came de déviation (20) sur le bras de serrage (19), l'agencement étant de telle sorte que lorsque le bras (19) se déplace de sa première vers sa deuxième position, la came (20) dévie d'abord la barre de déviation (26) puis relâche la came de déviation (26) de sorte que celle-ci se déplace derrière la came (20).

3. Boîte selon la revendication 1 ou 2, dans laquelle chaque élément de serrage (12, 13) inclut un montant de support (15) monté pour un mouvement angulaire et axial dans un manchon (21) faisant partie intégrante du corps (11) ou étant fixé à celui-ci.

4. Boîte d'accessoires électriques selon l'une quelconque des revendications précédentes, comprenant une plaque frontale (33) couvrant l'intérieur du corps creux (11).

5. Boîte d'accessoires électriques selon la revendication 4, dans laquelle l'élément vissé (38) s'étend à travers la plaque frontale (33).

6. Boîte d'accessoires électriques selon l'une quelconque des revendications précédentes, dans laquelle l'élément vissé comprend une vis (38).

7. Boîte d'accessoires électriques selon l'une quelconque des revendications précédentes, incluant un accessoire électrique.

8. Boîte à accessoires électriques selon la revendication 7, la boîte étant fermée à ladite extrémité par une plaque frontale, des câbles de connexion électriques ayant des premiers connecteurs s'étendant depuis l'arrière ou le côté de la boîte à accessoires pour s'engager avec des câbles de surface ayant des connecteurs correspondants situés à l'intérieur de la paroi creuse.
